# EUROPEAN PATENT APPLICATION

(11) **EP 1 574 937 A2**
(43) Date of publication of application: **14.09.2005**
(21) Application number: 05101469.4
(22) Date of filing: 25.02.2005
(51) Int. Cl.: G06F 3/033, H04N 5/232

(54) **Camera apparatus with colour-keyed user interface display**

(30) Priority: 10.03.2004 KR 2004016089
(71) Applicant: SAMSUNG ELECTRONICS CO., LTD., Gyeonggi-Do 442-742 (KR)
(72) Inventor: Kim, Kuie-sup, Gyeonggi-do (KR)
(74) Representative: Geary, Stuart Lloyd

(57) **Abstract**

A photographing apparatus in which a menu is displayed in an on screen display (OSD), the apparatus having an OSD generating part for generating a plurality of OSD menu items in different colors, a displaying part for displaying a list of menu items on a screen, and a controlling part for controlling the OSD generating part and the displaying part so as to display a list of submenu items of a selected OSD menu item in the same color as the selected menu item when one of the OSD menu items is selected. Thus, the selected menu item and the submenu are displayed in the same color, thereby increasing the discrimination between each.

## Description

The present invention relates to camera apparatus comprising a user interface display screen and processing means configured to display a first user interface menu on the display screen and, in dependence on the selected item of the first menu, a menu selected from a plurality of second menus, associated with respective items of the first menu.

With the development of electronics technology, miniaturized and lightweight electronic appliances have been developed and popularized in various fields. Digital cameras and digital camcorders are examples of such electronic appliances. These digital imaging apparatuses have a greater variety of functions than conventional optical photographic apparatuses. Furthermore, since digital imaging apparatuses are provided with LCD display windows, the image being captured and previously captured images can be easily viewed.

In using these digital imaging apparatuses, a user can actively use the functions provided in the digital imaging apparatus according to his or her needs using menus. For example, the user can freely set functions such as colour mode, black and white mode, image resolution, image brightness and shutter speed, and can also change the operational configuration of the photographing apparatus which has been preset.

The menus are typically displayed in using an OSD (on screen display) type process. The user can change and set functions by selecting items in the OSD type menus using a direction button and a numeral button.

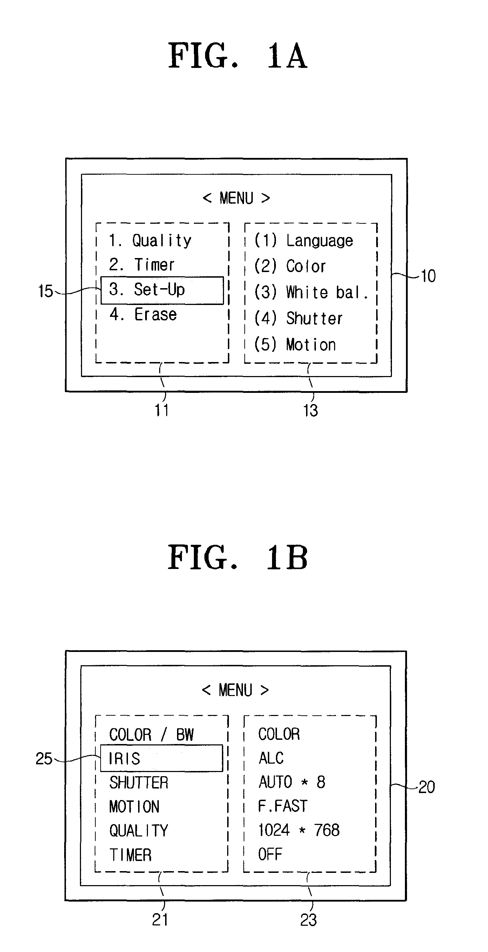

Figures 1A and 1B show an OSD menu screen of a conventional imaging apparatus.

Referring to Figure 1A, a main menu 11 is vertically aligned on the left-hand side of the screen 10. Any of the menu items can be highlighted 15, for example, menu item "3. Set-Up", as shown in Figure 1A. A set up submenu 13 is displayed on the right-hand side of the screen 10 in response to the set up menu item in the main menu being highlighted.

The user can change a function by selecting a menu item using appropriate buttons, such as a direction button or a numeral button. That is, the user can change the highlighted menu item by operating the direction button up and down. The submenu 13 of the highlighted main menu item is then displayed on the right-hand side of the screen 10. The user can also press a right direction button, so that a submenu item can be highlighted instead of a main menu item. After the setting operation, the user can input a left direction button again, so that main menu items can be highlighted. If the user presses a setting button while the submenu item for a particular function is highlighted, the function turned "ON" or "OFF".

Accordingly, the user can change a setting of the imaging apparatus. However, in the conventional methods of displaying menus, it is difficult for users to determine which main menu item a submenu 13 belongs to.. Furthermore, since the main menu 11 and the submenu 13 are respectively displayed on the left-hand and right-hand sides of the same screen 10, another problem can exist wherein the space for displaying the setting state of the submenu 13 (i.e., whether the corresponding submenu item is in a state of "ON" or "OFF") is not sufficient. Therefore, since the size of each menu has to be made smaller in order for there to be sufficient space, yet another problem can exist wherein it is difficult for the user to read the menu items. In cases wherein there is a sub-submenu (not shown) that is provided in addition to the submenu 13, this problem is worsened.

Unlike Figure 1A, Figure 1B shows menus 21, 23 displayed together, without the divisions provided for the main menu 11 and the submenu 13. The menu 21 is displayed on the left-hand side of the screen 20 and the current setting 23 for each menu item is displayed on the right-hand side of the screen 20. That is, as shown in Figure 1B, a "COLOR/BW" selection function is set to "COLOR". The "IRIS" function set to "ALC" (Auto-iris Level Control). The "SHUTTER" function is set to "AUTO x 8", the "MOTION" function is set to "F.FAST", the "QUALITY" function is set to "1024 x 768" and the "TIMER" function is set to "OFF".

In this example, if the user wants to change the setting of a particular function, the user presses a setting button after positioning highlighting the corresponding menu item. For example, if the "IRIS" menu item is highlighted and the user presses the setting button, the "IRIS" function is changed from "ALC" mode to "ELC" (Electronic Level Control) mode. In this state, if the user presses the setting button once more, the mode is changed back from "ELC" mode to "ALC" mode. In addition, if the user would like to set the imaging apparatus to the "BW" (Black and White) mode, the user highlights the "COLOR/BW" menu item and then presses the setting button so change the "COLOUR/BW" mode from "COLOR" to "BW".

In Figure 1B, the problem of the lack of display space for indicating the function settings or showing sub-submenus is substantially reduced. However, the confusion in discriminating between the menu items is significantly increased. As a result, a problem exists wherein it is difficult for the user to easily recognize the relationship between the menu items and the function settings 23.

Another multi-purpose imaging apparatus having a function of the digital camera and the digital camcorder has also been developed recently and popularized. The multi-purpose imaging apparatus has more varieties of menu item than each of a digital camera and a digital camcorder individually. Therefore, as shown in Figure 1B, if each menu item is displayed one by one and corresponding function state thereof is then displayed, it is difficult for the user to grasp the entire function set of the multi-purpose imaging apparatus.

A camera apparatus, according to the present invention, is characterised in that each item of the first menu has a characteristic colour and the second menus are colour-keyed to the associated first menu items.

Preferably, the processing means is configured such that the first menu is displayed horizontally and the second menus are displayed vertically. More preferably, the apparatus includes user input means and the processing means is configured to be responsive to an operation of the user input means to scroll the first menu. Still more preferably, The processing means is configured to determine that a first menu item is selected on the basis of its position on the display screen.

Preferably, the processing means is configured to display the selected main menu item and/or its displayed icon and/or caption enlarged.

Embodiments of the present invention will now be described, by way of example, with reference to Figures 2 to 5 of the accompanying drawings, in which:
Figures 1A and 1B are views showing OSD menus of conventional imaging apparatuses;
Figure 2 is a block diagram showing the construction of an imaging apparatus according to the present invention;
Figures 3A and 3B are views showing OSD menus of the imaging apparatus of Figure 2;
Figure 4 is a detailed block diagram of another imaging apparatus according to the present invention; and
Figure 5 is a flowchart showing a method of displaying OSD menus according to the present invention.

Well-known functions or constructions will not be described in detail since they would obscure the invention with unnecessary detail.

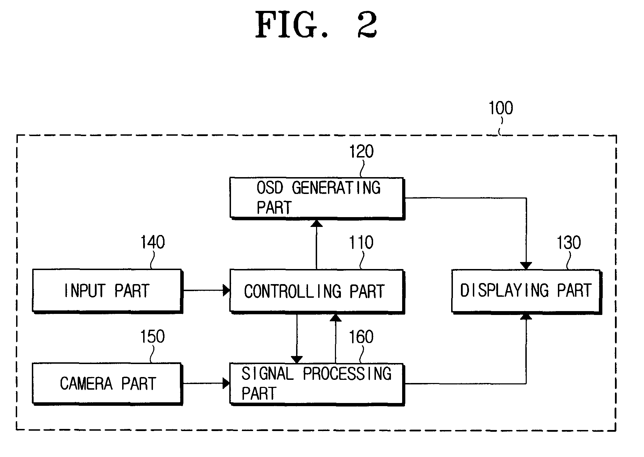

Referring to Figure 2, an imaging apparatus 100 comprises a controlling part 110, an OSD generating part 120, a displaying part 130, an input part 140, a camera part 150 and a signal processing part 160.

When a user inputs a capture signal, using the input part 140, the controlling part 110 controls the camera part 150 so as to capture an image of an scene. Data representing the captured image is processed in the signal processing part 160 and then recorded on a recording medium, such as a memory card or a VCR tape (not shown). The controlling part 110 also displays the data on the displaying part 130 so that the user can visually confirm the scene being captured.

The displaying part 130 can display moving images or still images of a scene. If the user desires to change a mode of the imaging apparatus 100, after viewing the moving image or still image, a menu provided in the photographing apparatus 100 is displayed by the display part 130 in response to operation of the input part 140.

That is, if a menu display command is input through the input part 140, the controlling part 110 controls the OSD generating part 120 so as to display an OSD type menu on the displaying part 130.

The OSD generating part 120 generates each to-be-displayed OSD menu item in a different colour. The controlling part 110 controls the displaying part 130 to display the menu, selected from a menu list, together with a submenu of the selected menu item. The menu list can be scrolled horizontally so that a position of each item therein is changed. Thus, the user can see that the menu list item, displayed in a particular position, is the currently selected menu list item. Alternatively, the user can move a cursor across the menu list so as to select a menu list item.

Once it is determined that a desired menu list item has been selected, the menu associated with the selected menu list item is also displayed on the screen by the controlling part 110. In this case, the menu is displayed in the same colour as the selected menu list item. That is, the title of the menu or the background of the user interface window, in which the menu is displayed, has the same colour as the selected menu list item. Therefore, it is possible to indirectly show that the menu, displayed on the screen, is associated with the selected menu list item.

The selected menu list item may further have a larger size than the other menu list items so that the user can easily see which menu list item is selected.

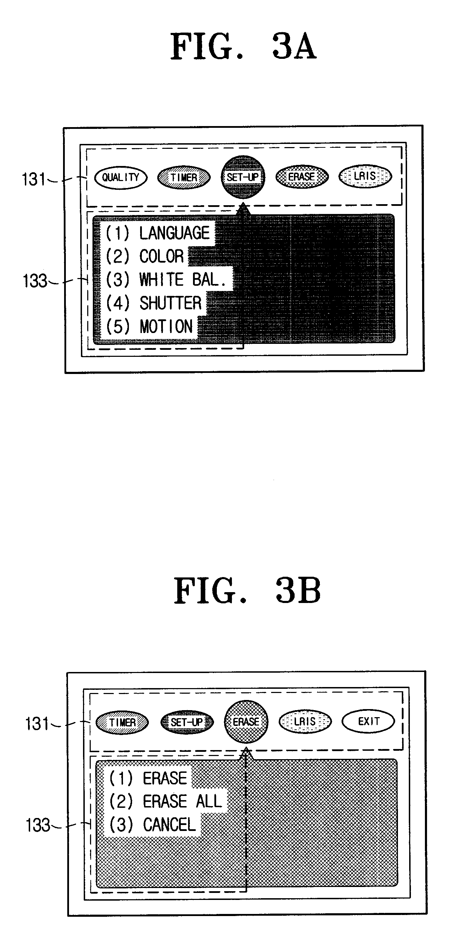

Referring to Figure 3A, a menu list 131 is horizontally aligned across the top of the screen. The displayed menu list 131 may be varied according to the type of imaging apparatus. That is, in the case of a digital camera, the menu list items such as "Erase" and "Timer", may be included in the menu list 131. In the case of a digital camcorder, menu list items such as "Hand-Shake Correction", "Auto Focus", "Digital Effects" (e.g., Blurring Out, Make-Up Effect), may be included in the menu list 131. Each menu list item included in the menu list 131 can be displayed in the form of a caption or icon that indicates the

As shown in Figure 3A, the size of the selected menu list item, i.e. the centre menu list item, is enlarged and the associated menu 133 is displayed below the menu list 131. Each menu list item is displayed in a different colours. Furthermore, the background of the user interface window, in which the associated menu 133 is displayed, is the same colour as the selected menu list item, thereby allowing easy discrimination from other menus.

The user can scroll the menu list 131 left or right using left and right direction buttons (not shown) provided at the input part 140. Thus, the centrally positioned, selected menu list item can be changed.

Figure 3B shows the case where the user has scrolled the menu list 131 to the left from the position shown in Figure 3A. As can be seen, the "Erase" menu list item is now selected and centrally positioned. That is, Figure 3B shows the movement from the selection of "Set-Up", shown in Figure 3A, to the adjacent menu list item "Erase".

Referring to Figure 3B, the controlling part 110 controls the OSD generating part 120 so as to reduce the "Set-Up" menu list item to the same size as other unselected menu items. The controlling part 110 then moves the "Set-Up" menu item to a left side and positions the "Erase" menu item at the center part of the screen. In this case, a scroll direction according to the input of the left and right direction button can be set in consideration of a user's convenience. That is, as shown in Figure 3A, if the user would like to select a menu item on the right side of the screen, the user typically presses the right direction button. Thus, the menu list has to be moved to the left side.

At this time, the "Erase" menu list item is enlarged to the same size as the previously selected "Set-Up" menu list item. Below the "Erase" menu list item, there is displayed a new menu 133, including items such as "(1) Erase", "(2) Erase All" and "(3) Cancel". In this case, the title and/or the background window of the submenu 133 is changed and now has the same colour as the "Erase" menu item, so that the user can clearly recognize that the submenu is for the "Erase" menu item.

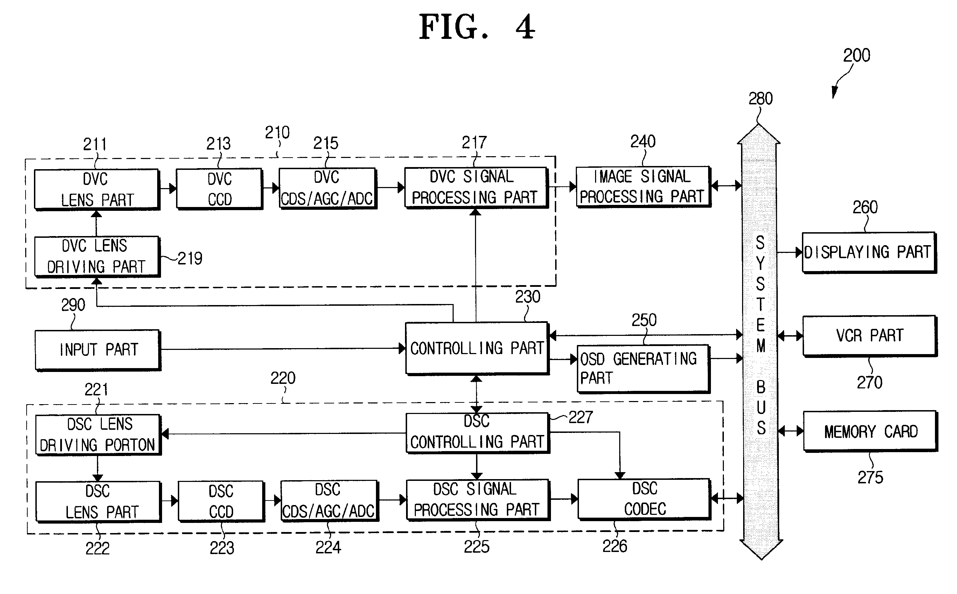

Referring to Figure 4, a multi-purpose photographing apparatus comprises a DVC (Digital Video Camera) module 210, a DSC (Digital Still Camera) module 220, a controlling part 230, an image signal processing part 240, an OSD generating part 250, a VCR (Video Cassette Recorder) unit 270, a memory card 275, a system bus 280 and an input part 290.

The DVC module 210 converts optical images, formed by a lens, into electric signals and then processes the electric signals. Both moving images and still images can be captured by the DVC module 210. However, the still images captured by the DVC module 210 have a lower quality than those captured by the DSC module 220. Therefore, the DVC module 210 is generally used for capturing moving images. The DVC module 210 is provided with a DVC lens part 211, a DVC lens driving part 219, a DVC CCD (Charge Coupled Device) part 213, a DVC CDS/AGC/ADC (Correlated Double Sampler/Auto Gain Controller/Analogue-to-Digital Converter) part 215 and a DVC signal processing part 217.

The controlling part 230 directs the DVC lens driving part 219 to control zooming of the DVC lens part 211, automatically control focusing and also control the size of the aperture of the iris (not shown) provided in the lens part 211.

The DVC CCD part 213 converts optical images, which formed by the DVC lens part 211, into an electric signals and outputs the electrical signals to the DVC CDS/AGC/ADC part 215.

The DVC CDS/AGC/ADC part 215 eliminates noise from the electric signals output from the DVC CCD part 213, using the CDS, and controls the signal amplitude using the AGC so that a level of the signal is kept constant. The DVC CDS/AGC/ADC part 215 then converts the signal into a digital signal by using the ADC.

The DVC signal processing part 217 divides the digital signal output from the DVC CDS/AGC/ADC part 215 into a luminance signal and a chrominance signal, and then performs operations of gain control, contour correction, and AWB (Auto White Balance).

The DSC module 220 converts an optical signal, which is input through a lens, into an electric signal and then processes the electric signal. Both moving images and still images can be captured by the DSC module 220. However, a data capacity for moving images captured by the DSC module 220 is much less than that for moving images captured by the DVC module 210. As a result, since a large memory space is required when recording moving images, it is substantially impossible to take the moving images for a long period of time. Therefore, the DSC module 220 is generally used for capturing still images.

The DSC module 220 is provided with a DSC lens part 222, a DSC lens driving part 221, a DSC CCD part 223, a DSC CDS/AGC/ADC part 224, a DSC signal processing part 225, a DSC CODEC (Encoder/Decoder) part 226 and a DSC controlling part 227.

The DSC controlling part 227 communicates with the controlling part 230 and controls the operations of the DSC lens driving part 221, the DSC signal processing part 225 and the DSC CODEC part 226.

The DSC lens driving part 221 drives the DSC lens part 222 under the control of the DSC controlling part 227. Specifically, the DSC lens driving part 221 controls the zooming operation of the DSC lens part 222, automatically controls focusing, and also controls the size of the aperture of the iris (not shown) provided in the DSC lens part 222.

The DSC CCD part 223 converts optical images, formed by the DSC lens part 222, into electric signals. Furthermore, the DSC CDS/AGC/ADC part 224 eliminates noise from the electric signals, output from the DSC CCD part 223, and keeps the level of the signal constant. The DSC CDS/AGC/ADC part 224 then converts the signal into a digital signal. The DSC signal processing part 225 divides the digital signal, output from the DSC CDS/AGC/ADC part 224, into a luminance signal and a chrominance signal, and then performs operations of gain control, contour correction, and AWB (Auto White Balance).

The DSC CODEC part 226 compresses the signal output from the DSC signal processing part 225 into a predetermined format and then supplies the compressed signal to the image signal processing part 240 using the system bus 280. In the example shown in Figure 4, the images a compressed into JPEG format, however any suitable format may be used.

The image signal processing part 240 functions to record captured image on the recording medium and to reproduce images recorded on the recording medium.

When the multi-purpose photographing apparatus 200 is operating in DVC imaging mode, the image signal processing part 240 compresses and records the image signal in DV or MPEG format. Furthermore, the image signal processing part 240 converts an audio signal, output by a microphone (not shown), into a digital signal and compresses the converted signal in PCM or G.726 format. The compressed signal is then recorded in the VCR unit 270 or the memory card 275 as directed by the controlling part 230. The VCR unit 270 records the image signal on a VCR tape mounted in a VCR deck (not shown).

In cases wherein the multi-purpose photographing apparatus 200 is operated in a DSC photographing mode, the image signal processing part 240 displays the image signal, which is taken by the DSC module 220 and then processed in the DSC signal processing part 225, through the displaying part 260 on the screen. In addition, the image signal processing part 240 records the compressed signal supplied from the DSC CODEC part 226 in the memory card 275 under the control of the controlling part 230.

In reproduction mode, the image signal processing part 240 extracts the compressed image signal, recorded in the VCR unit 270 or the memory card 275, and then supplies the extracted image signal to the displaying part 260 so as to reproduce the moving images or still images on the screen.

If the user inputs an operating signal for setting the menu through the input part 290, the controlling part 230 controls the OSD generating part 250 and the displaying part 260 so that the OSD menu is displayed on the screen. In this case, since the multi-purpose photographing apparatus 200 has the functions of both the digital camcorder and the digital camera, and is operated in various modes such as the DVC photographing mode, DSC photographing mode, DVC reproducing mode and DSC reproducing mode, the number of menu items is considerably increased.

Thus, the controlling part 230 can be adapted to control the display of only the menu items that are relevant to the present mode. If the apparatus 200 is in a status wherein the kind of menu to be displayed is standardized in any mode, the controlling part 230 can be further adapted to activate only the menu items that are relevant to the present mode and inactivate other menu items. A manufacturer can determine and configure this operation of the controlling part 230 in consideration of the user's convenience.

The controlling part 230 aligns the multiple menu items in one direction on the screen so that the user can easily recognize the displayed menu items. In this case, the menu items may be vertically aligned on the left side of the screen. However, in order to display the submenu as well as the menu setting state on the comparative small LCD screen, it is preferred that the menu items are horizontally aligned on the upper side of the screen.

The user can scroll the aligned menu list items by operating the one or more direction buttons provided in the input part 290. The controlling part 230 regards the menu list item positioned at a particular place, for example, the centre position of the horizontal row of menu list items, as shown in 131 of Figures 3A and 3B at the centre part of the upper side of the screen, as the selected menu item. Therefore, the controlling part 230 controls the OSD generating part 250 and the displaying part 260 so that the selected OSD menu list item bigger than the other menu list items and, at the same time, the menu associated with the selected menu list item is displayed below.

The OSD generating part 250 can further generate OSD menu list items having a different colours from each other. The menu associated with each menu list item has the same colour as its parent menu list item. Thus, the user can easily recognize the association between menu list items and menus.

In use, the user can position the cursor on a desired submenu item by operating the one or more up and down direction buttons provided in the input part 290, and can then press the selecting button so as to set a desired function.

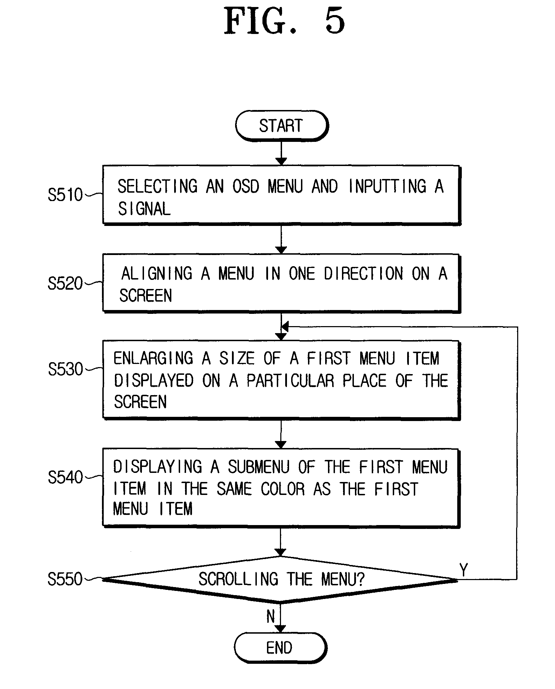

Referring to Figure 5, which is a flowchart showing an exemplary method of displaying the OSD menu in the multi-purpose photographing apparatus shown in Figure 4, first, if the user inputs an operating signal through the input part 230 at step (S510), the controlling part 230 controls the OSD generating part and the displaying part 260 so as to display the multiple OSD menu list items on the screen at step (S520). In this case, it is preferred that the OSD menu list items are horizontally aligned across the top of the screen. Furthermore, each menu list item can be displayed in the form of an icon, showing the subject of each menu item, as well as the menu list item's caption.

The controlling part 230 regards a menu list item, displayed at a particular place, for example the central position of the horizontal alignment of menu list items, as shown in 131 of Figures 3A and 3B at the top centre part of the screen, as the first or selected menu list item, and enlarges the selected menu item at step (S530).

In this case, each OSD menu item is provided by the controlling part 230 as having a different colour, and the associated menu of the selected first OSD menu list item is displayed in the same colour as the parent OSD menu list item at step (S540). Thus, the discrimination between the menu list items in increased.

If the user horizontally scrolls the menu list items using the left or right direction buttons at step (S550), the central menu list item can be changed. Since the central menu list item is changed to another menu list item, a size of the newly selected menu item is increased and the associated menu of the newly selected menu list item is displayed by returning to step (S530).

Accordingly, the user can confirm the selectable menu list items by a simple operation, and can also easily recognize the parent menu list item of the displayed menu.

According to the present invention as described above, since the menu for setting a function of the photographing apparatus is horizontally aligned on the upper side of the screen, the user can easily select the desired menu item by using the direction button. Further, since each OSD menu item has a different color, and the submenu of the selected menu item has the same color as the selected menu item, discrimination between the menu items and between the menus is more easily determined. Furthermore, since the selected OSD menu item has a larger size than other menu items, the user can easily recognize the selected menu item.

## Claims

1. A camera apparatus comprising a user interface display screen (130) and processing means (110, 120) configured to display a first user interface menu (131) on the display screen (130) and, in dependence on the selected item of the first menu (131), a menu (133) selected from a plurality of second menus, associated with respective items of the first menu, **characterised in that** each item of the first menu (131) has a characteristic colour and the second menus (131) are colour-keyed to the associated first menu items.

2. A camera apparatus according to claim 1, wherein the processing means (110, 120) is configured such that the first menu (131) is displayed horizontally and the second menus (133) are displayed vertically.

3. A camera apparatus according to claim 2, including user input means (140), wherein the processing means (110, 120) is configured to be responsive to an operation of the user input means (140) to scroll the first menu (131).

4. A camera apparatus according to claim 3, wherein the processing means (110, 120) is configured to determine that a first menu item is selected on the basis of its position on the display screen.

5. A camera apparatus according to any preceding claim, wherein the processing means (110, 120) is configured to display the selected main menu item and/or its displayed icon and/or caption enlarged.

6. A multi-purpose photographing apparatus which can selectively take moving images and still images, comprising:
an on screen display (OSD) generating part for generating a plurality of OSD menu items in different colors, respectively;
a displaying part for displaying a list of the menu items on a screen; and
a controlling part for controlling the OSD generating part and the displaying part so as to display a list of submenu items of a selected OSD menu item in the same color as the selected OSD menu item when one of the OSD menu items is selected.

7. The apparatus according to claim 6, wherein the controlling part is configured to control the OSD generating part and the displaying part so that the OSD menu items are provided as icons that are horizontally aligned on an upper side of the screen.

8. The apparatus according to claim 7, wherein the controlling part is further configured to control the OSD generating part and the displaying part so that the selected OSD menu item icon has a larger size than any other menu item icon.

9. The apparatus according to claim 7, wherein the controlling part is further configured to scroll the OSD menu items in a left or right direction in response to an external selecting signal, and to determine that an OSD menu item is selected if the OSD menu item is positioned on a particular place of the screen.

10. A photographing apparatus, comprising:
an on screen display (OSD) generating part for generating a plurality of OSD menu items in different colors, respectively;
a displaying part for displaying a list of the menu items on a screen; and
a controlling part for controlling the OSD generating part and the displaying part so as to display a list of submenu items of a selected OSD menu item in the same color as the selected menu item when one of the OSD menu items is selected.

11. The apparatus according to claim 10, wherein the controlling part is configured to control the displaying part so that the OSD menu items are provided as icons that are horizontally aligned on an upper side of the screen.

12. The apparatus according to claim 11, wherein the controlling part is further configured to scroll the OSD menu items in a left or right direction in response to an external selecting signal.

13. The apparatus according to claim 11, wherein the controlling part is further configured to control the OSD generating part and the displaying part so as to enlarge a size of the selected OSD menu item icon and then display the enlarged menu item icon.

14. A method of displaying an on screen display (OSD) menu in a multi-purpose photographing apparatus which can selectively take moving images and still images, comprising steps of:
generating a plurality of OSD menu items in different colors, respectively;
aligning a list of the OSD menu items horizontally on an upper side of a screen; and
displaying a list of submenu items of a selected OSD menu item in the same color as the selected OSD menu item.

15. The method according to claim 14, further comprising the step of enlarging a size of the selected OSD menu item and then displaying the enlarged OSD menu item.

16. The method according to claim 14, further comprising the steps of:
scrolling the OSD menu list in a left or right direction in response to an external selecting signal; and
determining that an OSD menu item is selected if the OSD menu item is positioned on a particular place of the screen.
